# EUROPEAN PATENT SPECIFICATION

(11) **EP 0 728 558 B1**
(45) Date of publication and mention of the grant of the patent: **02.06.1999**
(21) Application number: 96103486.5
(22) Date of filing: 01.03.1991
(51) Int. Cl.: B25B 31/00, F16B 21/18, A01K 37/00

(54) **Fastening devices and applicator**
Befestigungsmittel und Gerät zum Anbringen derselben
Dispositifs de fixation et applicateur

(30) Priority: 03.03.1990 GB 9004806
(43) Date of publication of application: 28.08.1996
(62) Divisional of application: 91905167.2
(73) Proprietor: Edgar, Martin Frank, Yarrowford, Selkirk TD7 5LZ (GB)
(72) Inventor: Eadie, Brian Kenneth McGregor, Renfrewshire PA19 4DH (GB); Agar, Ian, Bonnybridge, Stirlingshire FK4 2EU (GB)
(74) Representative: Cooper, John

(56) References cited:
- DE-A- 3 219 427
- FR-A- 1 137 627
- GB-A- 258 924
- GB-A- 442 195
- US-A- 1 598 587
- US-A- 3 064 263
- US-A- 3 066 304
- US-A- 3 628 230
- US-A- 3 807 360

## Description

This invention relates to anti-pecking beak bits.

Game birds, such as Pheasants and Partridges, when bred in captivity, have a tendency to fight. Attacks take the form of feather-pecking and can eventually lead, if blood is drawn, to cannibalism.

Since their introduction in the late 1960's anti-pecking devices called beak bits have been used to discourage and prevent feather-pecking. Originally manufactured from metal and formed in the shape of a 'C', they had to be fitted into the bird's beaks with a pair of pliers used to squeeze the ends of the beak bit into a location in each nostril cavity. This operation was slow, and completely manual. It was necessary to pick up a beak bit, then load it to the pliers. A bird would then have to be held in one hand while the assembly of beak bit and pliers is held in the other.

Subsequently plastic beak bits have been introduced for the same anti-pecking purpose. They can be applied by hand using a developed technique. However, it remains a painstaking job because the beak bits are supplied in a 'loose' fashion, and have to be individually selected from a bundle, before the application. They are stretched open to allow each end of the clip to be located into the nostril, and to this end circlip-pliers are often used to assist in this operation. The beak bits themselves are manufactured in the main from soft plastic to allow easy deformation by hand.

Each of the above versions of anti-pecking systems, namely metal or plastic beak bits, has its own advantages and disadvantages. However they both have the fundamental drawback in that they are completely stressful for the animals in particular, and disagreeable for the person. Automation is highly desirable, and an aim of this invention is to make the application of anti-pecking beak bits more efficient. The invention relates particularly to anti-peck devices manufactured from a plastic material.

US-A-3807360 discloses a conventional type of C-shaped beak bit formed from resilient plastics material.

According to the present invention there is provided an anti-pecking beak bit comprising a generally C-shaped member of resilient plastic material having first and second limbs and a central portion interconnecting said limbs, characterised by having an indentation formed in the outer face of said central portion.

Preferably, said indentation is positioned substantially in the middle of said central portion.

In accordance with a first embodiment of the invention, the member is of substantially constant cross-section throughout, and said indentation is formed by a kink in the central portion thereof.

In accordance with a second embodiment of the invention, said central portion is substantially thicker than said limbs in the plane of the member, and said indentation is formed in said thickened central portion.

In accordance with a further embodiment of the invention, there is provided a stack of generally C-shaped beak bits according to the invention, comprising a plurality of said members frangibly connected together in series for loading into a magazine.

In accordance with yet another embodiment of the invention, there is provided a method of applying a beak bit according to the invention, wherein said beak bit is applied by use of a device including first and second pivotable jaw members each having an outer end adapted to receive and retain said beak bit between said jaws.

Preferably, the beak bit cooperates with the outer ends of said jaw members which are each provided with a shoulder having an upstanding projection thereon.

Preferably also, said beak bit is initially loaded into a magazine forming part of said device and said indentation is adapted to cooperate with a ridge (10) extending along the length of the interior of said magazine.

Embodiments of the invention will now be described, by way of example only, with reference to the accompanying drawings, in which:-
Fig 1 is a side view of an applicator device for use with anti-pecking beak bits embodying the invention;
Fig 2 is a plan view of the device of Fig 1;
Fig 3 is a plan view of the interior of one of two identical shell halves forming part of the device of Fig 1;
Fig 4 shows a second jaw member of the device of Fig 1;
Fig 5 shows a first jaw member of the device of Fig 1;
Fig 6 is a plan view of the device of Fig 1 with its magazine and one shell half removed, showing the jaw members in the retracted position;
Fig 7 is a view similar to that of Fig 6, with the jaw members in their extended position;
Figs 8, 9 and 10 are perspective views illustrating the use of the device of Figs 1 to 7;
Fig 11 is a plan view of a first type of beak bit embodying the invention;
Fig 12 is a plan view of a second type of beak bit embodying the invention; and
Fig 13 is a perspective view of a stack of beak bits in accordance with a second aspect of the invention.

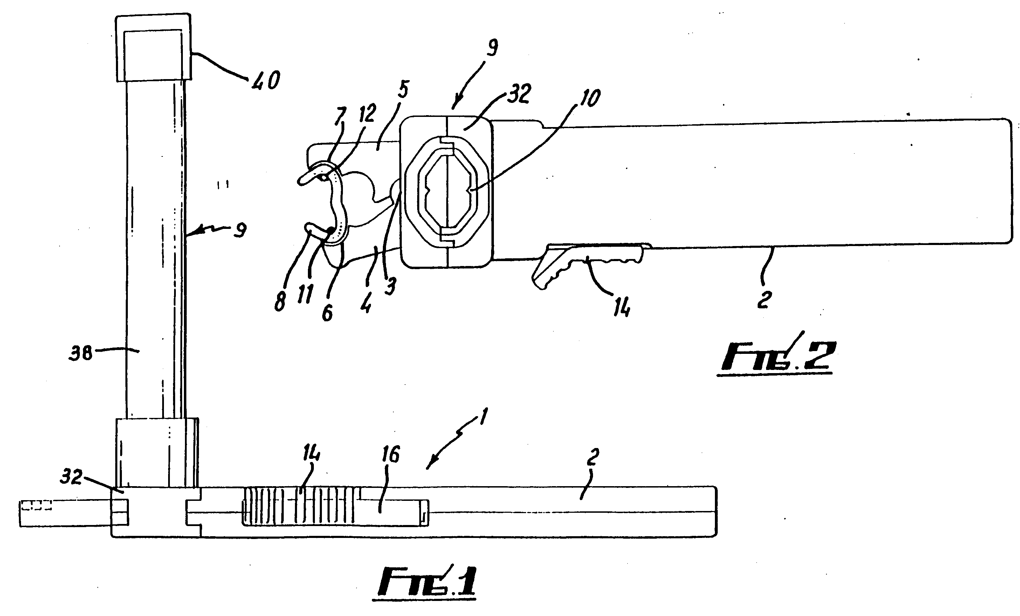

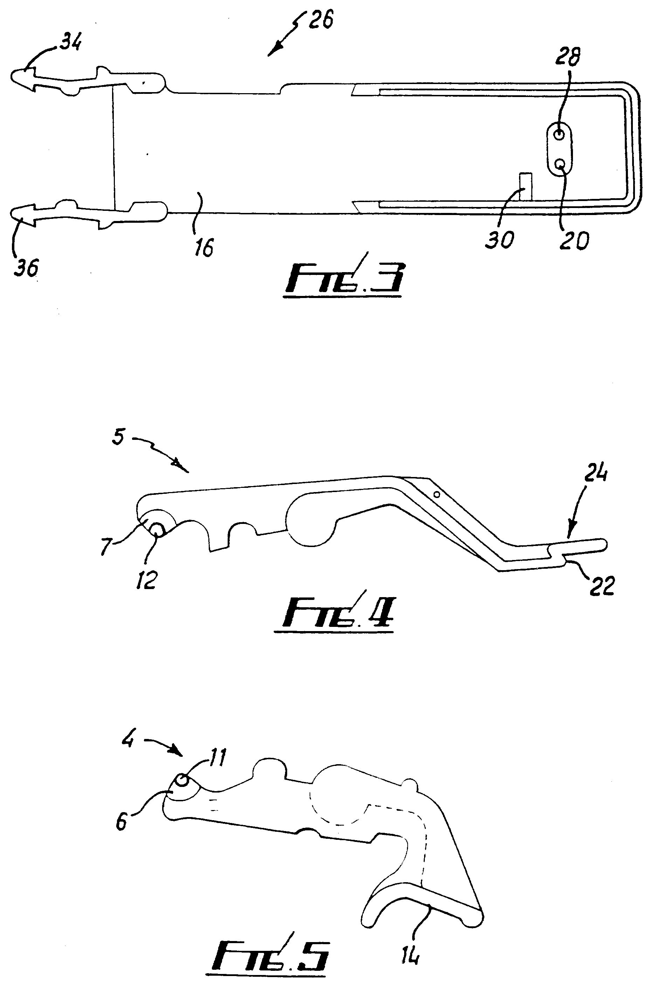

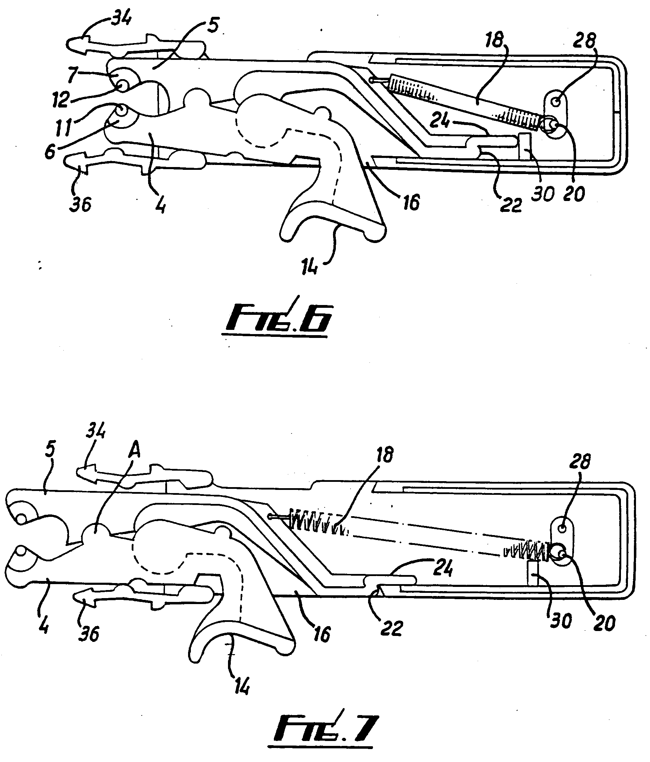

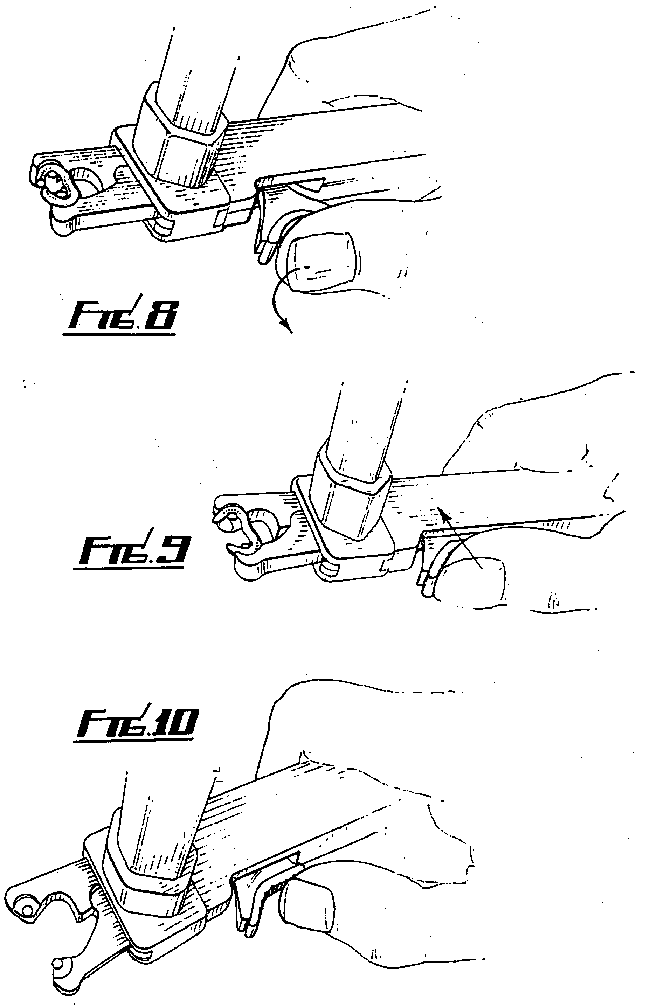

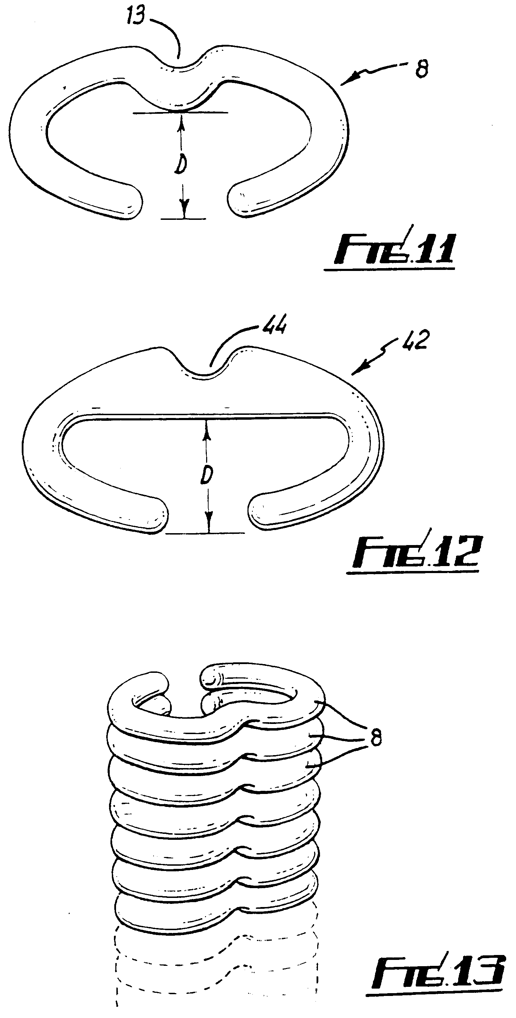

Referring to the drawings, a bit applicator for use with anti-pecking beak bits in accordance with the invention comprises an elongate housing 1, part of which forms a handle 2. The housing 1 contains a slidably mounted assembly 3 comprising first and second pivotably connected jaw members 4 and 5.

An elongate tubular magazine 9 is connected to the forward end of the housing 1, and is adapted to store a stack of generally C-shaped bits 8.

The forward ends of the jaw members 4 and 5 are formed with opposed arcuate shoulders 6 and 7 having upstanding projections or pins 11 and 12 formed thereon.

The assembly 3 is slidable along the long axis of the housing between a retracted position, wherein the jaws 4 and 5 are closed and the shoulders 6 and 7 are aligned with the magazine 9. In the extended position, the jaws 4 and 5 are pivotable between a closed and an open position. In this example the jaws do not meet when "closed" so as not to impinge upon the bird's beak during application of a bit. Both the sliding motion of the assembly 3 and the pivotal motion of the jaws 4 and 5 are controlled by thumb pressure on an actuating member 14 which is formed integrally with the first jaw member 4 and which extends through a slot 16 extending lengthwise along one side of the handle 2.

The assembly 3 is biased towards its retracted position by a coil spring 18 or other resilient member, which in this example is connected between the second jaw member 5 and a pin 20 formed in the interior of the handle 2 towards the rear end thereof.

With the assembly 3 in its retracted position, the closed jaws 4 and 5 receive the bottom-most bit 8 of the stack in the magazine 9. The bit rests on the shoulders 6 and 7 with the projections 11 and 12 located inside the arcs of its "upper" and "lower" limbs. In the retracted position, the actuating member 14 is located at the rear-most end of the slot 16. By applying thumb pressure to the actuating member, the assembly 3 is slid forward against the biasing force of the spring 18 into its extended position, carrying the bit 8 with it. The assembly locks automatically in its extended position by means of a shoulder 22, formed in a tail portion 24 of the second jaw member 5 extending rearwardly within the housing 1 alongside the spring 18, which engages the rear-most end of the slot 16. The spring 18 is disposed at an angle to the long axis of the housing 1 so as to exert a transverse bias force (in addition to the main longitudinal bias force) urging the tail portion 24 towards the side of the handle 2 in which the slot 16 is formed.

In the extended position, the jaws 4 and 5 may be opened (pivoting about knuckle-joint A), spreading the limbs of the bit, by thumb pressure on the actuating member 14. The bit is thus opened and held securely under tension during the application procedure. Once the bit 8 has been applied, the assembly 3 is unlocked by thumb pressure on the actuating member 14, disengaging the shoulder 22 from the slot 16, and returns to its retracted, closed position to receive another bit 8 from the magazine 9. The loading, and re-loading of the jaws 4 and 5 is thus performed automatically, and the spreading and application of the bit 8 is achieved by simple manipulation of the actuating member 14.

The housing 1 is formed from two identical shell halves 26, each including co-operating pins 20 and recesses 28, and lugs 30, one of which provides a stop member against which the tail 24 of the second jaw member 5 abuts when the assembly 3 is retracted.

The magazine 9 preferably comprises a collar portion 32 which is a removable snap-fit onto first and second flexible prongs 34 and 36 extending forwardly from the front ends of the shell halves 26 on either side thereof. The tubular body 38 of the magazine 9 extends from the collar 32 substantially at right-angles to the pivot plane of the jaws 4 and 5, and has its upper end closed by a cap 40.

The housing 1, jaw members 4 and 5 and magazine 9 are suitably formed from moulded plastics.

In accordance with the present invention, the bits 8 themselves are generally C-shaped and each includes an indentation 13 formed at the middle of the "outside" of the central arc interconnecting the limbs of the C-shape.

In the example shown in Fig 11, the indentation is provided by forming a kink in the C-shaped bit formed from a rod of resilient plastic material. Fig 12 shows an alternative embodiment in which the central arc of the C-shape is thickened in the plane of the bit 42, the indentation 44 being formed in the thickened portion.

In both these cases, the indentations 13 and 44 co-operate with a correspondingly shaped ridge 10 extending along one side of the tube 38 of the magazine 9, which assists in correctly locating and guiding the movement of the bits. The indentations also serve to make the bits more suitable for use with young birds by reducing the internal dimension D of the bit. In the case of Fig 12, the interior surface of the thickened portion will be worn away over time by the action of the bird's beak, and will thus adapt its size as the bird grows, thereby extending the useful life of the bit. In the case of Fig 11, the kink formed in the bit enhances its resilient properties.

The bits are preferably formed in a frangibly connected serial stack (Fig 13), such that a large number of bits can be handled and loaded into the magazine as a single unit. Forward movement of the assembly 3 from its retracted position detaches the lowermost bit from the stack. The stack may be fed through the magazine into the jaws 4 and 5 simply by gravity, but is preferably resiliently biased by means of a spring-loaded plunger or the like in a manner which will be apparent to those of ordinary skill in the art.

Figs 8, 9 and 10 are perspective views illustrating the operation of the applicator showing, respectively, the jaws extended and closed, with a bit in place, the jaws extended and partially open, spreading the bit, and extended and fully open, after application of the bit.

The present Application is divided from European Patent Application No. 91905167.2 (European Patent No. 0518917B), which is directed towards the applicator device as described herein.

Modifications and improvements may be incorporated without departing from the scope of the invention as defined in the Claims appended hereto.

## Claims

1. An anti-pecking beak bit (8,42) comprising a generally C-shaped member of resilient plastic material having first and second limbs and a central portion interconnecting said limbs, characterised by having an indentation (13,44) formed in the outer face of said central portion.

2. The beak bit of Claim 1, wherein said indentation is positioned substantially in the middle of said central portion.

3. The beak bit of Claim 1 or Claim 2 wherein said member (8) is of substantially constant cross-section throughout, and said indentation (13) is formed by a kink in the central portion thereof.

4. The beak bit of Claim 1 or Claim 2, wherein said central portion is substantially thicker than said limbs in the plane of the member (42), and said indentation (44) is formed in said thickened central portion.

5. A stack of generally C-shaped beak bits as claimed in any one of Claims 1 to 4, comprising a plurality of said members frangibly connected together in series for loading into a magazine.

6. A method of applying a beak bit as claimed in any preceding Claim, wherein said beak bit is applied by use of a device including first and second pivotable jaw members (4,5) each having an outer end adapted to receive and retain said beak bit between said jaws.

7. A method as claimed in Claim 6, wherein the beak bit cooperates with the outer ends of said jaw members (4,5) which are each provided with a shoulder (6,7) having an upstanding projection thereon.

8. A method as claimed in Claim 6 or Claim 7, wherein said beak bit is initially loaded into a magazine (9) forming part of said device and said indentation is adapted to cooperate with a ridge (10) extending along the length of the interior of said magazine.

## Patentansprüche

1. Ein Antihack-Schnabelstück (8, 42) bestehend aus einem im allgemeinen C-förmigen Teil aus einem elastischen Kunststoffmaterial mit ersten und zweiten Schenkein und einem die Schenkel verbindenden Mittelteil, dadurch gekennzeichnet, daß an der Außenfläche des Mittelteils eine Einkerbung (13, 44) gebildet ist.

2. Schnabelstück gemäß Anspruch 1, wobei die Einkerbung im wesentlichen in der Mitte des Mittelteils gebildet ist.

3. Schnabelstück gemäß Anspruch 1 oder Anspruch 2, wobei das Stück (8) durchgehend einen im wesentlichen konstanten Querschnitt aufweist und die Einkerbung (13) durch eine Kinke in dessen Mittelteil gebildet wird.

4. Schnäbelstück gemäß Anspruch 1 oder Anspruch 2, wobei in der Fläche des Teils (42) der Mittelteil wesentlich dicker ist als die Schenkel und wobei die Einkerbung (44) in diesem verdichteten Mittelteil gebildet wird.

5. Ein Stapel von im allgemeinen C-förmigen Schnabelstücken gemäß einem der Ansprüche 1 bis 4, bestehend aus einer Vielzahl von Teilen, die serienmäßig zur Ladung in ein Magazin leicht lösbar miteinander verbunden sind.

6. Ein Verfahren zum Anbringen eines Schnabelstücks gemäß einem der vorhergehenden Ansprüche, wobei das Schnabelstück unter Verwendung einer Vorrichtung angebracht wird, die erste und zweite drehbare Backenteile (4, 5) aufweist, die jeweils ein äußeres Ende haben, das dazu ausgelegt ist, das Schnäbelstück zwischen den Backen aufzunehmen und zu halten.

7. Verfahren gemäß Anspruch 6, wobei das Schnabelstück mit den äußeren Enden der Backenteile (4, 5), die jeweils mit einem Ansatz (6, 7) mit einem davon abstehenden Vorsprung versehen sind, zusammenwirkt.

8. Verfahren gemäß Anspruch 6 oder Anspruch 7, wobei das Schnabelstück zuerst in ein Magazin (9), das Teil der Vorrichtung bildet, geladen wird und wobei die Einkerbung ausgerichtet ist, um mit einer Rille (10), die sich entlang der inneren Länge des Magazins erstreckt, zusammenzuwirken.

## Revendications

1. Un anneau de bec contre les coups de bec (8, 42) comprenant un élément généralement en forme de lettre C en matière plastique élastique comprenant une première et une seconde branches et une portion centrale reliant lesdites branches, caractérisé en ce qu'il présente une dentelure (13, 44) pratiquée dans la face externe de ladite portion centrale.

2. L'anneau de bec de la revendication 1, dans lequel la dentelure est située sensiblement au milieu de ladite portion centrale.

3. L'anneau de bec de la revendication 1 ou de la revendication 2 dans lequel ledit élément (8) est entièrement constitué d'une transversale sensiblement constante, et ladite dentelure (13) est formée par une encoche dans sa portion centrale.

4. L'anneau de bec de la revendication 1 ou de la revendication 2, dans lequel ladite portion centrale est sensiblement plus épaisse que lesdites branches dans le plan de l'élément (42), et ladite dentelure (44) est formée dans ladite portion centrale épaissie.

5. Une pile d'anneaux de bec généralement en forme de lettre C selon une quelconque des revendications 1 à 4, comprenant une pluralité des dits éléments reliés de façon séparable les uns aux autres en série pour le chargement dans un magasin.

6. Un procédé d'application d'un anneau de bec selon une quelconque des revendications précédentes, dans lequel ledit anneau de bec est appliqué en utilisant un dispositif comprenant un premier et un second éléments de mâchoire pivotants (4, 5) chacun possédant une extrémité externe adaptée pour recevoir et retenir ledit anneau de bec entre lesdites mâchoires.

7. Un procédé selon la revendication 6, dans lequel l'anneau de bec coopère avec les extrémités externes des dits éléments de mâchoire (4, 5) lesquels sont chacun munis d'un épaulement (6, 7) comportant une projection droite.

8. Un procédé selon la revendication 6 ou la revendication 7, dans lequel ledit anneau de bec est initialement chargé dans un magasin (9) qui fait partie du dit dispositif et ladite dentelure est adaptée pour coopérer avec une arête (10) qui s'étend sur la longueur de l'intérieur du dit magasin.
